# EUROPEAN PATENT SPECIFICATION

(11) **EP 2 243 672 B1**
(45) Date of publication and mention of the grant of the patent: **01.05.2013**
(21) Application number: 10153756.1
(22) Date of filing: 16.02.2010
(51) Int. Cl.: B60S 3/06, B60S 3/04

(54) **Dual-gantry vehicle washing system and a vehicle washing process**
Doppelportal-Fahrzeugwaschsystem und Verfahren zum Waschen von Kraftfahrzeugen
Système de lavage de véhicule à double portique et procede pour laver les vehicules

(30) Priority: 24.04.2009 IT GE20090024
(43) Date of publication of application: 27.10.2010
(73) Proprietor: Aquarama Srl, 12060 Novello (CN) (IT)
(72) Inventor: Abbà, Adriano, I-12010 Vignolo (CN) (IT); Molinari, Roberto, I-14050 Cessole (AT) (IT)
(74) Representative: Karaghiosoff, Giorgio Alessandro

(56) References cited:
- EP-A- 1 621 428
- DE-U1- 29 816 527
- GB-A- 1 291 050
- US-A1- 2002 144 366

## Description

The present invention relates to a dual-gantry vehicle washing system comprising a first gantry fitted with at least the drying devices, i.e. the so-called drying gantry, and a second gantry fitted with at least one brush assembly, i.e. the so-called washing gantry.

Vehicle wash systems, and particularly car wash systems may be divided into two large classes: fixed gantry systems, in which the car moves to the washing and drying devices, and movable gantry systems, in which the car lies still on a track along which one or more gantry structures are slideably guided by rails, with wash liquid spray devices, brushes and vehicle drying devices mounted thereto.

Wash systems are also known, which include one gantry whose structure is fitted with both the brushes and the cleansing liquid delivery devices and the drying devices for directing air streams along the contour of the car.

Single gantry systems have the advantage of being more compact but involve long car washing and drying times, because the gantry is required to move several times along the contour of the car to complete the washing and drying process.

In order to improve the efficiency of single-gantry wash systems, severable gantries have been developed, which include a main motorized gantry that may be moved back and forth along rails relative to the vehicle in the longitudinal direction thereof, which motorized gantry is connected by translational means to a second gantry portion having liquid spray devices.

European Patent EP1445160 discloses a car wash system comprising one main movable gantry with an arch perpendicular to the main gantry, that has multiple liquid spray nozzles, and which arch is in turn capable of being displaced relative to the main gantry from an open position in which it is farther from the main gantry in the same direction of displacement thereof, to a closed position in which it is closer thereto, its displacement from one position to the other occurring along guides that are fixed to the main gantry by controllable propulsion means.

The arch is driven into its open position while the gantry is still, and remains in the open opposition until it reaches the back of the car, whereupon it is translated to the closed position against the main gantry. This will ensure a time delay from the delivery of cleaning agents and the washing step, e.g. using brushes fixed to the main movable gantry.

The arch sprays the car with cleaning or preserving agents in liquid or foam form, or with high pressure wash water.

This kind of gantry affords improvements in car washing because, as liquid spray devices are moved away from the main washing gantry that supports the brushes for mechanical dirt removal, it allows such liquids to exert their action on the surfaces to be treated for some time, before removal thereof by the brushes.

The need of reducing washing and drying times has led to the development of dual-gantry washing systems which comprise a drying gantry fitted with wheel-washing devices, devices for spraying and distributing liquid presoakers, lateral and upper arches for spraying pressurized water and devices for directing air jets against the vehicle for drying, and a second gantry, the so-called washing gantry, which normally comprises water and wax spray devices and horizontal and vertical brushes for mechanical removal of dirt from the vehicle.

This kind of system reduces washing and drying cycle times, as both gantries are allowed to move at the same time to drive in quick succession the devices on the two gantries, e.g. those for high pressure spraying on the drying gantry, followed by those for shampoo delivery and brushing on the washing gantry during the washing step and finally these two successively driven gantries allow operation of brushes with rinsing water by the washing gantry, followed by the operation of air jet delivery devices on the drying gantry.

Thus, the vehicle washing and rinsing step may be started while the drying devices are still drying a previously washed vehicle.

A dual-gantry system is also known, in which at least one of the two gantries is severable.

Italian patents PC2004A000029 and PC2004A000033 disclose a dual-gantry system in which one of the two gantries is severable, and may be divided into a main motorized gantry and a secondary gantry pulled by the former and connected thereto by mechanical means which allow the two elements to be moved away from each other during the forward stroke and to be moved towards to each other and be held together during the backward stroke.

In the embodiment disclosed therein, the severable element with high pressure spray devices is supported by the drying gantry.

The washing cycle includes a forward stroke, with the drying gantry moving along the track while spraying the presoak agent and scanning the contour of the vehicle and pulling the pressurized water spray arch, followed by a forward motion of the washing gantry.

During the backward stroke, the washing process is completed by moving forward the washing gantry and then the drying gantry with the secondary gantry joined thereto.

The purpose of this system is to reduce washing times as well as the size of the system.

The means for connecting together the main drying gantry and the secondary gantry may comprise any prior art device, such as a pantograph or pairs of mutually hinged rods, sliding along the gantry structures with a scissors-like motion, or preferably such connection means consist of a telescopic arm for base connection of the secondary gantry to the main gantry.

As shown in the figures and disclosed in Italian patent PC2004A000033, the main gantry and the secondary gantry are not only interconnected, but are both designed to slide back and forth along tracks to carry out the various steps of the washing cycle.

Furthermore, as shown in the figures and disclosed in the description, the secondary gantry that supports the devices for directing high pressure water to the vehicle, is only moved away from the main gantry during the forward stroke, i.e. while presoak agents are sprayed and the brushes perform their washing action.

Particularly, such secondary gantry is pulled by the drying gantry at the start of the washing step, whereas, during the backward stroke, which completes the washing cycle by a second dirt removal and rinsing step by the brushes and a subsequent drying step, it moves together with the drying gantry to abutment against the washing gantry.

Therefore, the above-described severed gantry has a complex structure, requiring the provision of both means for connecting the two gantry parts and means for allowing both parts to slide on the bearing surface of the system.

Furthermore, the devices for connecting the two gantry parts allow the second gantry element to be only driven, whereby the second gantry may be only moved away from the first gantry during the forward stroke of the washing cycle and not during the backward stroke.

Since one of the purposes of having a severed gantry, comprising a main gantry that supports the washing means, such as brushes or drying means, and a secondary gantry that supports high pressure liquid spray means, is to introduce a time delay between the actions of the devices of each gantry element on the surfaces of the vehicle, and particularly to allow enough time for liquids to exert their action on the surfaces of the vehicle prior to the mechanical dirt removal action by the brushes and to prevent any interference between the action of air jets and the liquids sprayed by the nozzles supported by the secondary gantry, the construction of the severable gantry of patent PC2004A000029 might only provide such advantages during the first washing step, when the second gantry is pulled by the main gantry, and not throughout the washing cycle, because during the backward stroke of this cycle, the secondary gantry that supports high pressure water spray nozzles is driven along the rails of the system while being in joined relationship with the drying gantry.

The object of the present invention is to obviate the above drawbacks by providing a dual-gantry vehicle washing system according to the claim 1 or claim 18.

Particularly, said second gantry element is supported in a cantilever fashion by swinging articulation means which keep the plane subtended by the second gantry element substantially parallel to the first gantry element.

The swinging articulation means comprise at least one swinging arm, preferably a four-bar linkage or a support pantograph, composed of two pairs of parallel arms, which arms are linked to the lower portion of the posts of the first gantry element and to an upper crossbeam of the second gantry element or the horizontal arm for supporting an upper crossbeam of the second gantry element.

The drying gantry is fitted with nozzles of a presoak agent spray device, which device may be designed to be movable along vertical guides associated with the posts, which guides may be also arranged to guide the sliding motion of a device for scanning and storing the contour of the vehicle. The data collected by the scan means will be transmitted to the electronics of the system for adjustment of the gantry motion along the rails and of the position and orientation of the various operating elements on the gantry.

The drying gantry may be further fitted with nozzles for delivering wheel rim cleansing and/or polishing agents, and nozzles for delivering vehicle body polishing agents, as well as a drying device having lateral and horizontal outlets, capable of being displaced and oriented to follow the contour of the vehicle.

Particularly, lateral air outlets may be mounted to the posts of the drying gantry in a fixed position, in combination with movable outlets capable of being oriented with at least one degree of freedom, which are located on the crossbeam and/or the posts of the gantry to follow the contour of the vehicle and particularly ensure that the top of the vehicle, i.e. the roof, can be dried.

The drying gantry may obviously not include certain features, such as the devices for spraying body or wheel rim polishing agents, or some operating elements of the drying gantry may be designed to be idle during the washing cycle.

The washing gantry is in turn fitted with a wheel washing device, composed of a rotary thigh pressure liquid delivering device and brushes, at least one pair of vertical motor-driven brushes, at least one horizontal brush capable of moving along the posts of the gantry, nozzles for spraying water or a mixture of water and cleansing agents, located at said brushes and nozzles for delivering rinsing water, located on the side of the washing gantry that faces away from the drying gantry.

The washing gantry, particularly on the side facing towards the drying gantry, may be also fitted with one or more nozzles for spraying cleansing products such as shampoos or the like, which are delivered before operation of the brushes, as nozzles of a pre-brush device.

The washing gantry may obviously not include certain features, such as the wheel washing device or nozzles for spraying cleansing products such as shampoos or the like to be delivered before operation of the brushes, or some operating elements of the washing gantry may be designed to be idle during the washing cycle.

The posts and/or the crossbeam of the second gantry element are fitted with one or more nozzles of a device for delivering a high pressure liquid, particularly water, or a low pressure liquid, particularly water or mixtures thereof with wax, polishing agents or the like.

Such nozzles may be mounted in a fixed position, e.g. to the posts of the gantry or be movable and capable of being oriented to follow the contour of the vehicle.

According to a variant embodiment, to be described in greater detail below, said second gantry element or the arms of the supporting four-bar linkage may be fitted with nozzles for delivering cleansing products such as shampoos or the like, which are sprayed on the vehicle before operation of the brushes, as nozzles of a pre-brush device.

For instance, the posts and/or the crossbeam of the second gantry element may be fitted with one or more nozzles of a device for delivering liquids such as water, a mixture of water and cleansing agents, wax, polishing agents or the like, which liquids are alternately delivered to the vehicle according to the current washing step.

Said cleansing agent nozzles may be also provided on a third gantry element or on arms linked to the swinging articulation means that support the second gantry element, said third gantry element or said arms being disposed substantially parallel and between said second and said first gantry elements.

As the vehicle is in front of the drying gantry, the washing cycle starts, with the gantries successively moving at least once in one direction, i.e. a so-called forward stroke, and in the opposite direction, i.e. a so-called backward stroke, along the rails at each side of the stationary vehicle.

The system of the present invention allows the operating elements to be distributed over at least three gantry elements, namely a gantry fitted with at least the drying devices, a first gantry element equipped with at least the washing devices and a second gantry element having the devices for delivering high pressure liquids or low pressure liquids, particularly water or mixtures thereof with wax, polishing agents or the like.

Said gantries or gantry elements are movable away or towards each other, to allow a time delay to be introduced between the operations of the operating elements of each gantry or gantry element during the washing cycle, and to also minimize size requirements when these gantries or gantry elements are in side-by-side relationship.

With the present invention, the devices for delivering high pressure liquids or low pressure liquids, particularly water or mixtures thereof with wax, polishing agents or the like, are located between the drying gantry and the washing gantry, and particularly between the drying outlets and the brushes supported by the first gantry element of the washing gantry, on a second gantry element that is capable of being moved, during both forward and backward strokes of the washing cycle, away from both the drying gantry and the first gantry element with which it is connected via swinging articulation means.

This technical solution ensures higher washing performance, because the forward stroke of the washing cycle, with the motion of the drying gantry being followed by the motion of the washing gantry, allows high pressure water to be delivered not immediately after the presoak agent, unlike the case in which the two presoak agent and high pressure water delivery devices are located on the drying gantry, thereby affording time for in-depth action of the presoak agent, and high pressure water is not delivered immediately before delivery of the cleansing agents and operation of the brushes, unlike the case in which the high pressure water delivery device is located on the gantry element equipped with brushes, thereby affording time for high pressure sprayed water to at least partially remove the dirt soaked by the presoak agents.

Furthermore, if high-pressure nozzles were located too close to the drying gantry, water might be also sprayed on air outlets, and be hence delivered to the vehicle.

Also, since the wax and polisher delivery device is supported by the second gantry element, which is located at a certain distance from both the drying gantry and the first gantry element of the washing gantry, during the backward stroke of the washing cycle, in which the first gantry element equipped with the brushes is the first to move along the rails, followed by the drying gantry, wax may be delivered after a given time, and not immediately after vehicle rinsing, whereby any undesired wax removal by rinsing water is prevented, unlike the case in which the wax delivery nozzles are supported by the washing gantry, and such wax may be delivered some time before drying by the outlets supported by the drying gantry, which affords time for the polishing agent to exert its action, unlike the case in which such wax delivery nozzles are supported by the drying gantry.

Furthermore, the variant embodiment in which pre-brush cleansing agent delivery nozzles are located on the second gantry element and/or on the third gantry element and/or on the swinging articulation means, allows advanced delivery of such agents before operation of the washing gantry brushes for dirt removal.

These and other features and advantages of the invention will be more apparent from the following description of a few embodiments shown in the accompanying drawings, in which:

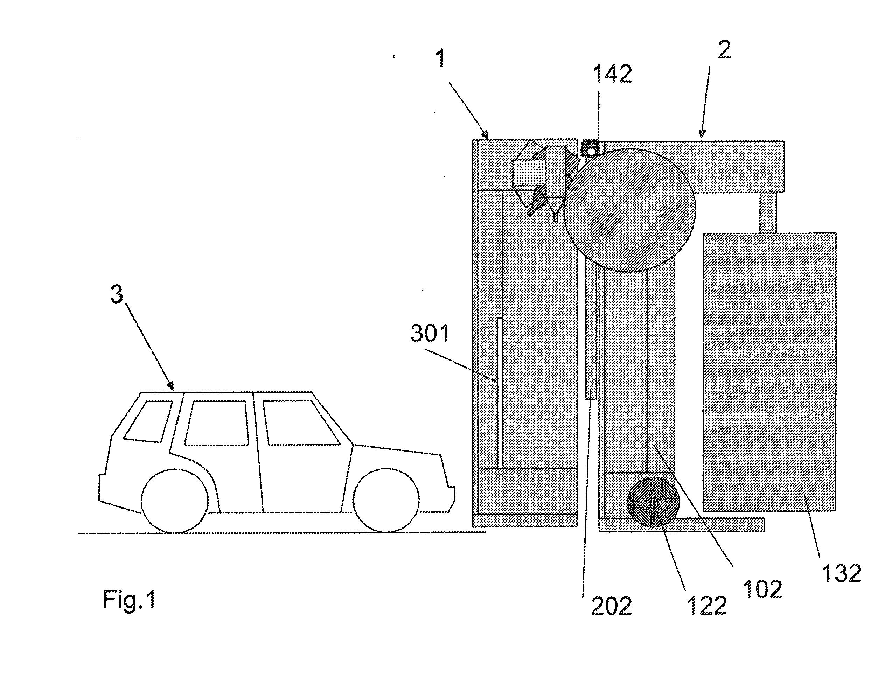

Fig. 1 is a diagrammatic lateral view of a vehicle wash system of the invention, with the drying gantry abutting against the washing gantry at the start of the forward stroke of the washing cycle and at the end of the backward stroke of the washing and/or drying cycle,
Fig. 2 is a diagrammatic lateral view of a vehicle wash system of the invention, with the second washing gantry element hangingly supported at a certain distance from the first gantry element during the forward stroke of the washing cycle,
Fig. 3 is a diagrammatic lateral view of a vehicle wash system according to a variant of the invention, with the second and third washing gantry elements hangingly supported at a certain distance from the first gantry element during the forward stroke of the washing cycle,

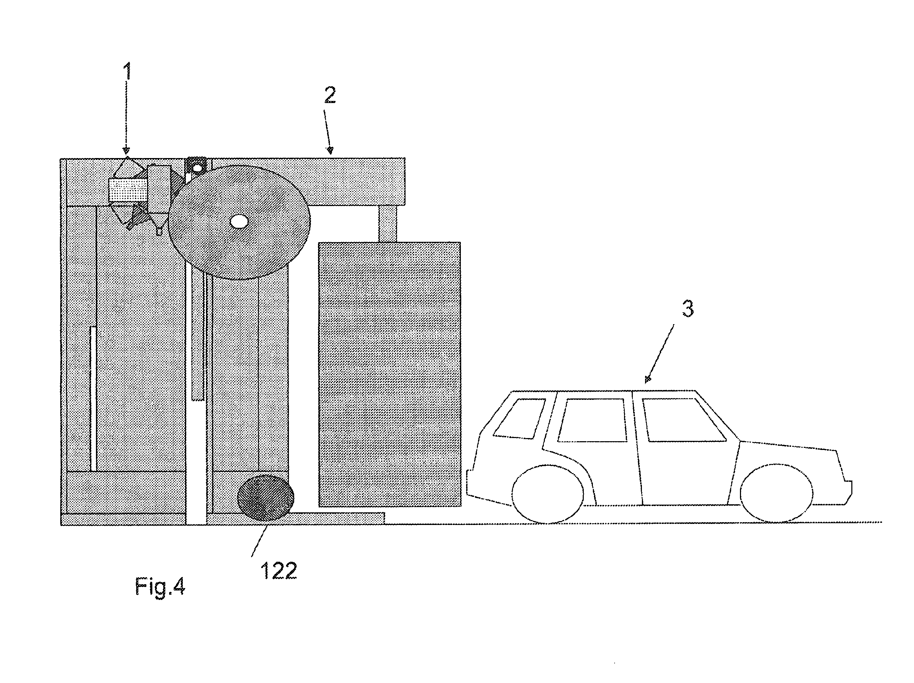

Fig. 4 is a diagrammatic lateral view of a vehicle wash system of the invention, with the drying gantry abutting against the washing gantry at the of the forward stroke of the washing cycle,
Fig. 5 is a diagrammatic lateral view of a vehicle wash system of the invention, with the second washing gantry element hangingly supported at a certain distance from the first gantry element during the backward stroke of the washing cycle,
Fig. 6 is a diagrammatic lateral view of a vehicle wash system according to a variant of the invention, with the second and third washing gantry elements hangingly supported at a certain distance from the first gantry element during the backward stroke of the washing cycle,
Figs. 7a-7f are diagrammatic views of the succession of steps of a washing cycle with a system of the present invention.

Referring to the annexed figures, the vehicle wash system of the present invention comprises a first gantry or drying gantry 1 and a second gantry or washing gantry, generally designated by numeral 2.

The gantries 1 and 2 are fitted with all the operating elements that are used for thorough washing of a vehicle 3, as described in greater detail below.

In the washing cycle of the present invention, the gantries 1 and 2 may be caused to reciprocate along rails, in the longitudinal axis of the vehicle 3, for said gantries to run one or more forward and backward strokes during a washing cycle.

At the start and at the end of the washing cycle, these washing and drying gantries 1 and 2 are in adjacent positions, thereby reducing the overall size of the washing system.

According to the present invention, at least one of the two gantries, here the washing gantry 2, is severable and is composed of a first motorized gantry element 102 capable of back and forth sliding motion relative to the vehicle 3, and a second non-motorized gantry element 202, which is supported in a cantilever fashion by said first gantry element 102.

Particularly, the first gantry element 102, which is fitted with at least one brush assembly, lies on the ground and is slideably guided by motor-driven translational means.

The second gantry element 202 is connected to the first gantry element 102 via swinging articulation means 112, which allow said second gantry element 202 to be displaced towards and away from a front side of said first gantry element 102, particularly the front side of said first gantry element 102 which faces towards the drying gantry 1, said articulation means 112 being of non-motorized type.

The second gantry element 202 is hangingly supported at a certain distance from the bearing surface of the first gantry element 102 and the first drying gantry 1, so that during its sliding motion away from the drying gantry 1, the first motorized gantry element 102 of the second washing gantry 2 is displaced with the second gantry element 202 without any relative motion therebetween, whereas during its sliding motion towards the drying gantry 1, said second gantry element 202 is pushed against said first gantry element 102 upon abutment of said second washing gantry 2, with the second gantry element 202, against the first drying gantry 1 which acts as a stop to progressive motion towards it.

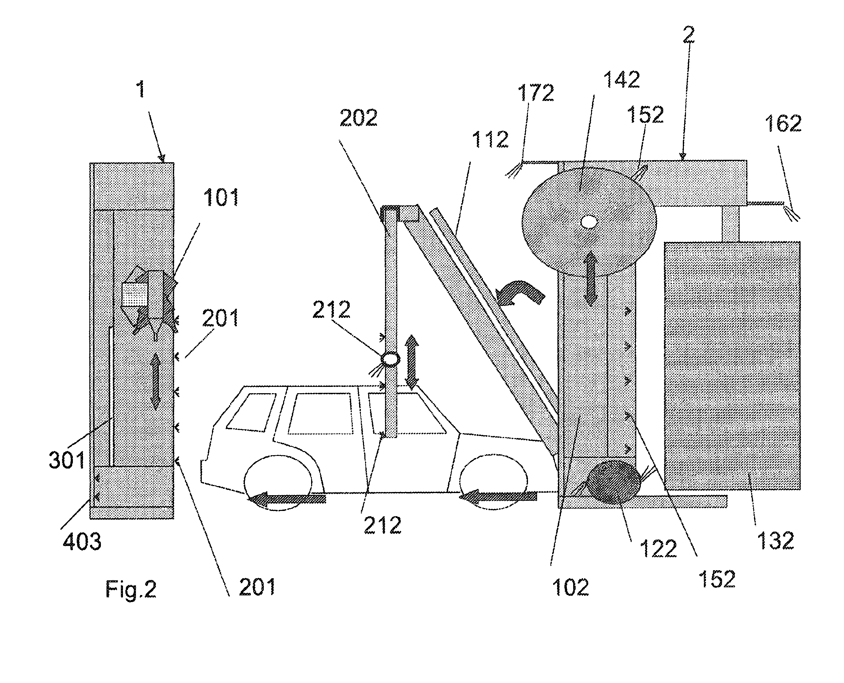

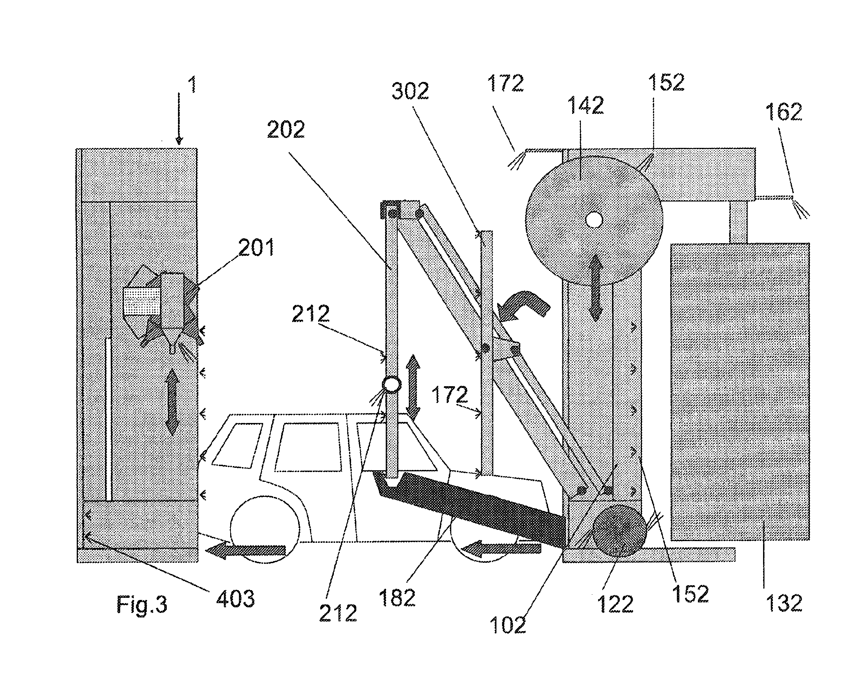

As shown in Figures 2 and 3, the swinging articulation means 112 allowing connection between the first gantry element 102 and the second gantry element 202 with the latter being supported in a cantilever fashion, include at least one swinging arm, linked to the lower portion of the posts of the first gantry element 102 and to an upper crossbeam of the second gantry element 202.

Otherwise, the swinging arms may be linked to the lower portion of the posts of the first gantry element 102 and to a horizontal arm supporting the upper crossbeam of the second gantry element 202.

In a preferred embodiment, the swinging articulation means 112 comprise a four-bar linkage or a support pantograph, composed of two pairs of parallel arms, which arms are hinged by pairs, which arms are linked to the lower portion of the posts of the first gantry element 102 and to an upper crossbeam of the second gantry element 202 or the horizontal arm supporting an upper crossbeam of the second gantry element 202.

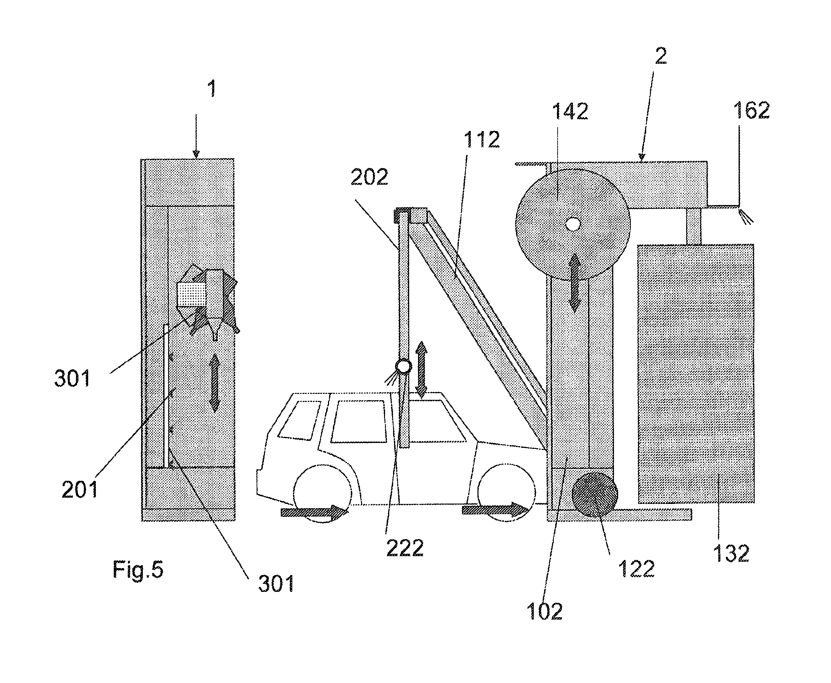

As shown in Figures 2, 3, 5 and 6, the swinging articulation means 112 can keep the plane subtended by the second gantry element 202 substantially parallel to the first gantry element 102.

Particularly, the four-bar linkage or the support pantograph can keep the plane subtended by the second gantry element 202 always substantially parallel to the first gantry element 102 and at least some of the operating elements on the second gantry element 202 may be supported by a horizontal bar associated with said second gantry element 202 so that an upward and downward motion is imparted to said operating elements relative to the bearing surface of the gantries 1 and 2 and the vehicle 3, to follow the contour of the car 3, said bar being vertically displaced along guides on the posts of the second gantry element 202 by independent electric, pneumatic or hydraulic lifting members.

This upward and downward translational motion of said horizontal bar will afford higher washing effectiveness, as it allows the operating elements on the second gantry element, particularly the operating elements supported by the second gantry element 202, to accurately follow the contour of the vehicle 3.

In one variant of the present invention, as shown in Figure 3, when the second gantry element 202, which is supported in a cantilever fashion by the swinging articulation means 112, hangs at a certain distance from both the drying gantry 1 and the first gantry element 102, it can lie on a cantilever support element 182.

Such support element 182 may consist of one, preferably two arms that are fixed to the lower portion of the posts of the first gantry element 102, which arms have at their free ends, opposite to the linked ends, a preferably concave or cup-shaped seat for receiving the free ends of the posts of the second gantry element 202. These support elements 182 or arms have such a length and inclination as to intersect the arch of the lower end of the second gantry element 202 at the greatest distance of the second gantry element 202 from said first gantry element 101.

When the washing gantry 2 and the drying gantry 1 are in adjacent positions, said support elements 182 or arms occupy voids of the drying gantry 1, without requiring any space and reducing the overall size of the wash system.

The presence of such support element 182 provides a safe bearing feature for the second gantry element 202, which is hangingly supported at a certain distance from the bearing surface of the first gantry element 102 and the first drying gantry which bearing feature is operated when the drying gantry 1 is away from the first gantry element 102 of the washing gantry, with the second gantry element 202 being consequently away from said first gantry element 102.

The drying gantry 1, particularly the crossbeam and the posts of the gantry 1 is fitted with various operating elements, including:
- one or more nozzles of a device for delivering a pressurized liquid, such as presoak and/or polishing agents 201,
- scan means 101 for scanning the contour of the vehicle 3,
- one or more outlets 301 for delivering jets or laminar flows of air to dry the vehicle 3,
- one or more nozzles 403 of a device for delivering a liquid product or a mixture of liquid products for washing and/or rinsing and/or polishing the wheel rims of the vehicle 3.

Particularly, the means for scanning the contour of the vehicle 3 automatically read the shape of the vehicle 3 in two dimensions and may include any prior art reading device, such as mechanical tracers, photocells, ultrasonic devices, laser beams or cameras.

The information collected by the scanning means is stored in the system control electronics, which is known and will not be further illustrated and described herein.

In one embodiment, the vehicle 3 is scanned at the start of the washing and drying cycle, i.e. during the forward stroke of the first drying gantry 1, during delivery of cleansing agents.

However, the contour of the vehicle 3 may be also detected during the forward and backward strokes of the gantries 1 and 2.

During the washing and drying cycle, the electronic system transmits a number of pulses for adjusting the position and orientation of the operating elements on the drying gantry 1 and the washing gantry 2 so that they follow a contour equal to the previously stored shape, thereby optimizing brush pressure, as well as the distance and orientation of the liquid delivery devices and the drying outlets relative to the body of the vehicle 3.

The shape obtained by the means for scanning the vehicle 3 may be retrieved by the electronic system each time that successive repeated operations have to be carried out during the forward and backward strokes of the washing cycle.

By reading the vehicle 3 at the start of the forward stroke of the washing cycle and storing its shape, the number of sensors to be used during washing may be reduced, and all the operating elements may be controlled according to the data contained in the memory, in a preset time sequence.

According to one embodiment, the outlets 301 for delivering jets or preferably laminar flows of air for drying the vehicle 3 may be allowed to translate on the posts of the drying gantry 1, said outlets 301 being for instance mounted to a height displaceable support.

Particularly, the outlets 301 for drying the roof of the vehicle 3 are displaceable along the vertical axis of the post and may be oriented with one or more degrees of freedom to follow the contour of the vehicle 3, whereas the outlets 301 for drying the side walls of the vehicle 3 may be located in a fixed position on the posts of the drying gantry 1.

According to one preferred embodiment, the outlets 301 for delivery of jets, preferably laminar flows of air 301, drying the roof of the vehicle 3 are located in the vicinity of the front side of the drying gantry 1 facing towards the washing gantry 2, whereas the outlets 301 for delivery of jets, or preferably laminar flows of air 301 on the posts of the drying gantry 1 drying the side walls of the vehicle 3 are in a backward position, in the vicinity of the side of the gantry 1 opposite to the front side of the gantry 1 facing towards the washing gantry 2, so that during the drying cycle, i.e. during the backward stroke of the gantries, air is delivered to the vehicle 3 first by the roof drying outlets 301 and then by the side drying outlets 301. This time sequence for air delivery ensures optimized drying of the vehicle 3.

The second gantry element 202, i.e. the posts and/or the crossbeam of said second gantry element 202 are equipped with devices for directing pressurized liquids 212 to the body of the vehicle 3 through a number of nozzles, particularly there are provided one or more nozzles of a device for delivering a high pressure liquid, particularly water, or a low pressure liquid, particularly water or mixtures thereof with wax, polishing agents or the like.

Particularly, the nozzles for delivery of high pressure liquids, such as water, are provided at the free ends of the posts of the second gantry element 202 which is supported in a cantilever fashion by the first gantry element 102, so that said delivery nozzles may be positioned and oriented along the side walls and the upper contour, i.e. along the roof, of the vehicle 3.

In one embodiment, the devices and/or nozzles for delivery of high or low pressure liquids 212 along the side walls of the vehicle 3 are mounted in a fixed or movable fashion along the vertical axis of the posts of the second gantry element 202, and are connected to such posts, for instance, via a movable support, whereas the devices and/or the nozzles for delivery of high or low pressure liquids 212 along the upper contour of the vehicle 3, i.e. the roof, are capable of being displaced and/or oriented with at least one degree of freedom, in such a manner as to always ensure the most appropriate distance and orientation of the body of the vehicle 3 to be washed, using the contour data stored by the scanning means 101.

Possibly, at least some of the operating elements, i.e. the devices and/or nozzles for delivery of a high pressure liquid, particularly water, or a low pressure liquid, particularly water or mixtures thereof with wax, polishing agents or the like, on the second gantry element 202 may be supported by a horizontal bar associated with said second gantry element 202 so that an upward and downward motion may be imparted to said horizontal bar to follow the contour of the car, said bar being vertically displaced along guides on the posts of the second gantry element 202 by independent electric, pneumatic or hydraulic lifting members.

Such devices for delivery of high pressure liquids, particularly water 212, may be combined with devices for delivery of wax, polishing agents or the like 222 through a number of nozzles. Like in the case of high pressure water delivery devices 212, said nozzles for delivery of polishing agents may be displaced along the posts of the second gantry element 202 and are oriented by the system electronics to follow the contour of the vehicle 3, as defined by the scanning means 101.

In one preferred embodiment, one or more high pressure liquid delivery devices on the second gantry element 202 may be designed to deliver high pressure water during the forward stroke of the washing cycle, or polishing agents during the backward stroke, which devices include separate circuits for transfer and delivery of water and polishing agents and separate or common nozzles for delivery of said water or polishing agents.

The first gantry element 102 is in turn fitted with a pair of wheel washing devices 122, which consist of a combination of means for mechanical dirt removal and devices rotating about a substantially horizontal axis for delivery of a high pressure liquid agent or a mixture of such agents for washing and/or rinsing vehicle wheel rims.

The first gantry element 102 is also equipped with at least one pair of vertical rotating brushes or brush assemblies 132, at least one horizontal brush or brush assemblies 142, said horizontal brush 142 being mounted to a movable support along the posts of the first gantry element 102 of the washing gantry and being controlled by the system electronics. These vertical and horizontal brushes 132, 142 may be of the swinging type and are provided in combination with one or more nozzles of a device for delivery of a liquid product or a mixture of liquid products 152, such as water or a mixture of cleansing products for vehicle washing, said devices being placed close to the horizontal and vertical brushes 142, 132, thereby allowing simultaneous delivery of water or cleansing liquids, with mechanical dirt removal by said brushes 132, 142.

The vehicle 3 is rinsed by one or more rinsing water spray nozzles 162 arranged on the crossbeam and/or the posts of the washing gantry 2, particularly on the first gantry element 102 downstream from the vertical and horizontal brushes 132, 142.

According to a preferred embodiment, the first gantry element 102 is equipped with one or more nozzles 172 of a device for delivery of a liquid product or a mixture of liquid products, such as water or a mixture of cleansing products for vehicle washing, said delivery nozzles of the so-called pre-brush delivery device being disposed on the posts and/or the crossbeam of the first gantry element 102 upstream from and adjacent to the horizontal and/or vertical brush/es 142, 132, i.e. on the side of the second gantry element 202 facing towards the drying gantry 1, thereby allowing liquids to be delivered to the vehicle prior to mechanical dirt removal by said brushes 132, 142.

According to a variant embodiment of the present invention, the nozzles 172 of the pre-brush liquid delivery device are disposed on at least one post and/or the crossbeam of the second gantry element 202 and/or on the swinging articulation means that support said second gantry element 202 in a cantilever fashion, particularly on at least one of the arms of the pantograph or four-bar linkage.

Although this is not shown, the fluid feed lines of the various nozzles and the elements for controlling the position and orientation of the operating elements on the washing and drying gantries extend, like in prior art, within the posts or the crossbeams or the arms, that have a tubular or C shape, or said feed lines and said control elements are externally attached therealong as needed.

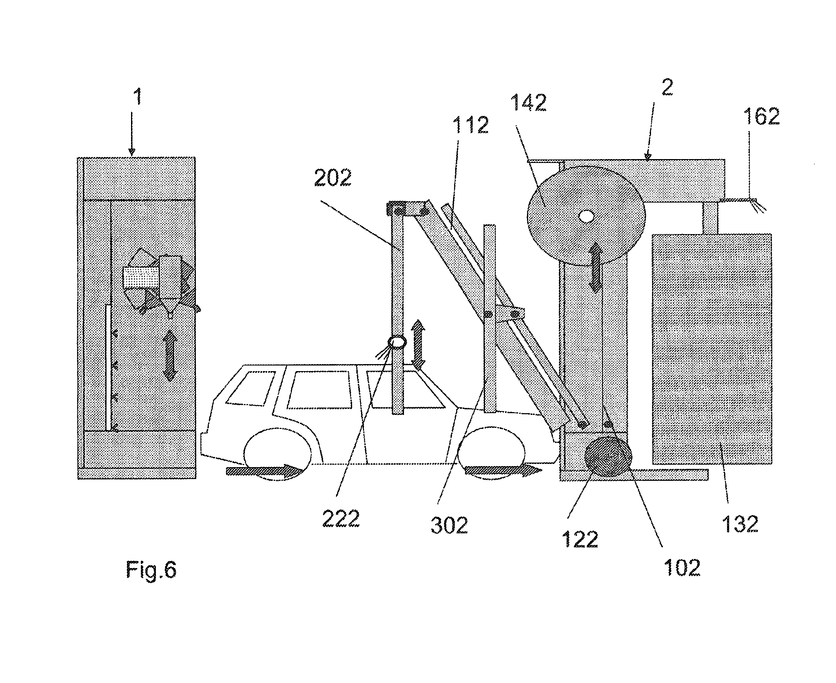

As shown in Figures 3 and 6, the wash system may feature a third gantry element or at least one, preferably two bars 302, said third gantry element or the bars 302 being supported in a cantilever fashion by the swinging articulation means 112 that keep the plane subtended by the third gantry element or the bars 302 substantially parallel to and between the first and second gantry elements 102, 202, particularly said third gantry element or said bars 302 being linked to at least one of the swinging arms of the support four-bar linkage or pantograph.

As described above concerning the second gantry element 202, said third gantry element or said bars 302 are not only parallel to the posts of the washing gantry 2 and the posts of the drying gantry 1, but may be also translated along an axis perpendicular to said gantries, so that said third gantry element or bars 302, and hence the operating elements associated therewith, may be lowered or lifted relative to the bearing surface of the vehicle 3 and the washing and drying gantries 2, 1 of the system.

In one embodiment, as shown in Figure 3, said third gantry element or said bars 302 have at least one nozzle of a liquid delivery device, and particularly one or more nozzles of a device for delivery of a liquid product or a mixture of liquid products, such as water or a mixture of cleansing products for vehicle washing, acting as a pre-brush delivery device 172.

Said nozzles for delivering shampoo or a mixture of liquid cleansing agents 172 disposed on the washing gantry in the proximity of the side that faces towards the drying gantry 1 or, alternatively or additionally, disposed on said third gantry element or said bars 302, are located downstream from the brushes 132 and 142 and are operated before said brushes to allow liquid delivery to occur prior to brush operation, thereby affording some time for the liquid cleansing agents to exert their action before mechanical dirt removal.

As anticipated above, the position and orientation in space of the operating elements on the gantries are adjusted by the system electronics according to the contour data of the vehicle 3 acquired by the scanning means 101 on the drying gantry 1 and are operated, for instance, at the start of the washing cycle.

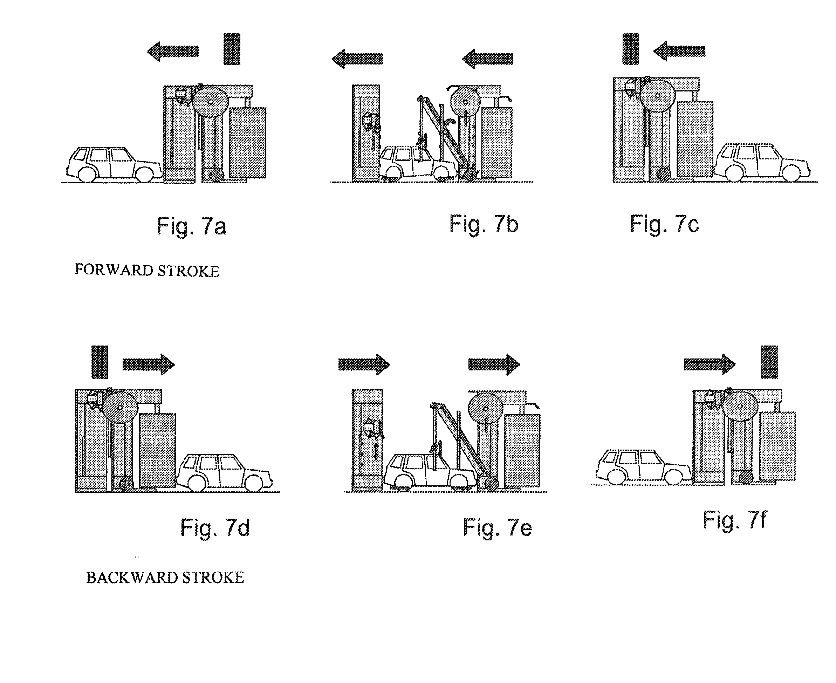

The above described preferred operation cycle of the system, in which the vehicle is stationary and the gantries move along rails or tracks adjacent to the sides of the vehicle 3 is schematically shown in Figures 7a to 7f and has at least one forward stroke and at least one backward stroke of the drying gantry 1 and the washing gantry 2 for each washing and drying cycle for the vehicle 3.

At the start of the washing cycle, the drying gantry 1 and the washing gantry 2 are in contact with each other, for minimized space requirements on the track and the vehicle 3 is placed in front of the drying gantry 1, as shown in Figure 7a.

During the forward stroke, the drying gantry 1 moves forward while spraying the presoak agent and removing any insect from the body of the vehicle 3, spraying the wheel rim washing product, scanning and storing the contour of the vehicle 3 and simultaneously moving the secondary gantry element 202 from the washing gantry 2,.

As the drying gantry 1 is moved away from the washing gantry 2, the swinging articulation means, namely the four-bar linkage 112 is automatically lowered and the second gantry element 202 is thus moved away from the first gantry element 102.

As shown in Figure 7b, when the second gantry element 202 has completed its forward stroke and its posts are adjacent to the side walls of the vehicle 3, particularly at the front portion of the vehicle, the so-called car "nose", the operating elements on said second gantry element 202 are operated, thereby starting high pressure liquid spraying, particularly water spraying by nozzles or an arch of displaceable and adjustable nozzles 212, which spray water both on the side walls and on the roof of the vehicle 3 while following the detected contour.

As described above, the high pressure water deliver nozzles 212 may be located on the arms of the swinging articulation means 112, whereby they are operated as said means 112 swing towards the drying gantry 1 while moving away from the first gantry element 102.

Then, the washing gantry 2 moves forward while spraying foam through the nozzles 172 of the pre-brush device, upstream from the brushes 132, 142, while carrying out a mechanical washing action by the vertical and horizontal brushes 132, 142 and the wheel washing devices 122, which include a combination of rotating high pressure nozzles for liquid cleansing agent delivery and brushes for mechanical dirt removal, and while spraying liquid cleansing agents and rinsing water at said brushes, through the nozzles 152, 162.

The mechanical washing and final rinsing step ends as the washing gantry 2 has completed its forward stroke to abutment, with the second gantry element 202, against the drying gantry 1, as shown in Figure 7c.

During the backward stroke, the first gantry element 102 of the washing gantry 2 is moved by the motorized means designed for driving it away from the drying gantry 1, while the washing step is completed by the brushes 132, 142 and rinsing is effected by the nozzles 162 downstream from the brushes, i.e. on the side of the washing gantry 2 not adjacent to the drying gantry 1 and possibly through water delivery by the nozzles 152 located at said brushes 132, 142.

As the first gantry element 102 is moved away, the swinging articulation means, and particularly the four-bar linkage 112, is lowered by gravity, thereby allowing the second gantry element 202 to be placed at a certain distance from said first gantry element 102, substantially parallel thereto, and to ensure its operation as shown in Figure 7e.

Particularly, the nozzles 222 for spraying polishing products, such as wax or the like, which are located on said second gantry element 202, particularly on the posts adjacent to the side walls of the vehicle 3 and/or on the crossbeam, are adjusted by the system electronics to such position and orientation as to follow the previously stored contour of the car 3.

Then, the drying gantry 1 is moved forward, while operating the drying devices, particularly the fixed lateral outlets 301 and the adjustable outlets 301 that follow the contour of the roof of the vehicle 3.

The washing step ends with the washing gantry and the drying gantry 1 in contact with each other, for minimized space requirement on the track of the wash system, so that said second gantry element 2 is pushed towards and against the front side of said first gantry element 102 facing towards the drying gantry 1.

According to a further embodiment, the above forward and backward strokes, in which the washing gantry 2 and the drying gantry 1 are moved away from each other to allow the second gantry element 202 to be lowered into a position parallel to the front sides of said first drying gantry 1 and said first gantry element 102 of the washing gantry at a certain distance from said first gantry element 102, may be separated by additional backward and forward strokes, in which the drying gantry 1 and the washing gantry 2 move while operating certain features.

At the end of the forward stroke, as shown in figures 7a-7c, the washing gantry 2 and the drying gantry 1 move along the longitudinal axis of the vehicle 3 and run an intermediate backward stroke to operate, during such backward stroke, the rinsing nozzles 162 and the brushes 132, 142 supported by the washing gantry 2, followed by the operation of the wax and polishing agent delivery nozzles 201 supported by the drying gantry 1.

At the end of the backward stroke, with the gantries 1 and 2 in side-by-side relationship, an intermediate forward stroke is run, in which the washing gantry 2 only operates the brushes 132, 142, for dry brush operation, thereby allowing even delivery and rubbing of the body of the vehicle 3 with the polishing agent and/or waxes previously delivered by the nozzles on the drying gantry 1.

At the end of such forward stroke, the previously described backward stroke starts, with the washing gantry 2 being the first to move away from the drying gantry 1 to allow the second washing gantry element 202 to be lowered and complete the washing cycle as described above, to a condition in which, at the end of the washing cycle, the gantries 1 and 2 are in adjacent positions on the system track, as shown in Figure 7f.

Since polishing products may have different action times on the body of the vehicle 3, the nozzles for delivery of waxes or polishing agents 201, supported by the drying gantry 1 may be operated, as described above, during the intermediate backward stroke, during the intermediate forward stroke or, if needed, the waxes or polishing agents 201 may be delivered during both intermediate backward and forward strokes.

In a further embodiment, another variant of the system operation cycle will have a base cycle including a forward stroke and a backward stroke of the drying gantry 1 and washing gantry 2.

Particularly, the above forward and backward strokes, in which the washing gantry 2 and the drying gantry 1 are moved away from each other to allow the second gantry element 202 to be lowered into a position parallel to the front sides of said first drying gantry 1 and said first gantry element 102 of the washing gantry at a certain distance from said first gantry element 102, may be separated by a different polishing cycle with additional backward and forward strokes, in which the drying gantry 1 and the washing gantry 2 move while operating certain features.

This operating cycle of the system comprising a polishing cycle has a forward stroke, as shown in Figures 7a to 7c, for the mechanical washing and final rinsing step, which ends when the washing gantry 2 completes its forward stroke to abutment, with the second gantry element 202, against the drying gantry 1, as shown in Figure 7c, and this forward stroke is followed by an intermediate backward stroke in which the washing gantry 2 operates the features for completing the washing cycle, whereas the drying gantry 1 operates the features for quick drying of the vehicle 3.

During the next intermediate forward stroke, the drying gantry 1 delivers wax, polishing agents or the like, while the washing gantry performs "dry rubbing" by operating the brushes only, which brushes ensure delivery of polishing agents, waxes or the like onto the body of the vehicle 3 and rubbing of such body therewith.

The operating cycle of this variant ends with a backward stroke, as shown in Figures 7d-7f, in which the brushes 132, 142 complete the washing step, and the nozzles 162 downstream from the brushes and/or the nozzles 152 at said brushes 132, 142 perform a rinsing step.

As the first gantry element 102 is moved away, the swinging articulation means, particularly the four-bar linkage 112 is lowered by gravity, for the second gantry element 202 to operate its features, i.e. to spray polishing products, such as wax or the like.

Then, the drying gantry 1 is moved forward while operating the drying devices.

The washing step ends with the washing gantry and the drying gantry 1 in contact with each other, for minimized space requirement on the track of the wash system, so that said second gantry element 2 is pushed towards and against the front side of said first gantry element 102 facing towards the drying gantry 1.

It shall be noted that, during the forward and backward strokes of the above described washing, drying and polishing cycles, the position and orientation of the operating elements on the drying gantry 1 and washing gantry 2 may be adjusted for optimized brush pressure, and optimized distance and orientation of the liquid delivery devices and drying outlets relative to the body of the vehicle 3, whose contour may be scanned and stored at the start of the washing cycle and/or detected during the forward and backward strokes of the gantries 1 and 2.

As used in this disclosure and accompanying claims, the polishing products and the like are part of a group of products that are known in the art as "polishes", whereby all the products within the class of "polishes" shall be covered by such terms.

As described above, the nozzles 172 for spraying shampoo or a mixture of water and liquid cleansing agents in the pre-brush device, i.e. the nozzles 172 upstream from the brushes 132, 142 which spray shampoo on the surface of the vehicle 3 during a step prior to mechanical dirt removal, may be placed on the first gantry element 102 of the washing gantry 2 close to the front side designed to be adjacent to the drying gantry 1, i.e. in a position downstream from said vertical and horizontal brushes 132, 142, or said nozzles 172 may be placed on the arms of the four-bar linkage 112 for supporting the second gantry element 202. As an alternative to or in combination with these embodiments, said nozzles 172 may be supported by a third gantry element or bars 302 which are linked to said four-bar linkage 112 in an intermediate position between the first gantry element 102 and the second gantry element 202.

The nozzles 172 on said third gantry element or said bars 302 are operated during the forward stroke of the washing cycle, i.e. as the swinging articulation means 112 are lowered by gravity towards the bearing surface of the gantries 1, 2 and the vehicle 3 and assume an inclined position to the posts of said gantries 1, 2 to allow the second gantry element 202 and the third gantry element or bars 302 to move away from the first gantry element 102. This arrangement allows the shampoo or mixture of liquid cleansing agents to be always delivered prior to operation of the vertical and horizontal brushes 132, 142 for mechanical dirt removal.

The above washing cycle might also include secondary variants, for instance the polishing step, the presoak agent delivery step or the wheel rim polishing step might be omitted.

The system of the present invention can reduce washing times, while increasing washing effectiveness, due to the distribution of the operating elements for washing and drying over at least three gantries or gantry elements, which allows operation of the various features with given time delays, thereby affording time for the presoak, polish, cleansing agents and the rinsing water to exert their action before removal or uniform delivery thereof by the action of the brushes or the drying outlets.

While the figures and disclosure address a wash system in which the washing gantry 1 may be severed into a first gantry element 102 and a second gantry element 202, said second gantry element 202 may be obviously linked to the drying gantry 1 the invention being extended to both versions.

## Claims

1. A dual-gantry vehicle washing system comprising a first gantry fitted with at least the drying devices, i.e. the co-called drying gantry (1) and a second gantry fitted with at least one brush assembly, i.e. the so-called washing gantry (2), said second gantry (1, 2) is composed of at least two gantry elements, namely a first gantry element (102) fitted with at least one brush assembly, which lies on the ground and is slideably guided by translational means, and has a motor for driving said translational means, and a second gantry element (202) which is connected to the first gantry element (102) via articulation means (112) allowing said second gantry element (202) to be displaced towards and away from a front side of said first gantry element (102), that is the front side of said first gantry element (102) which faces towards the first drying gantry (1), said articulation means (112)being of non-motorized type, **characterized in that** said second gantry element (202) is hangingly supported at a certain distance from the lower supporting ends of the first gantry element and the first drying gantry (1), so that the first gantry element (102) of the second washing gantry (2) is displaced with the second gantry element (202), during the translational motion, without any relative motion therebetween and said second gantry element (202) is pushed against said first gantry element (102) as said second washing gantry (2) abuts by its second gantry element (202) against the first drying gantry (1) which acts as a stop to progressive motion towards it.

2. A dual-gantry vehicle wash system as claimed in claim 1, **characterized in that** said second gantry element (202) is supported in a cantilever fashion by swinging articulation means (112) which keep the plane subtended by the second gantry element (202) substantially parallel to the first gantry element (102).

3. A dual-gantry vehicle wash system as claimed in claim 2, **characterized in that** said swinging articulation means (112) comprise at least one swinging arm, preferably a four-bar linkage or a support pantograph, composed of two pairs of parallel arms, which arms are linked to the lower portion of the posts of the first gantry element (102) and to an upper crossbeam of the second gantry element (202) or the horizontal arm for supporting an upper crossbeam of the second gantry element (202).

4. A dual-gantry vehicle wash system as claimed in one or more of the preceding claims, **characterized in that** at least one post and/or the crossbeam of the second gantry element (202) is equipped with one or more nozzles of at least one device for delivering a high pressure liquid, such as water, or a low pressure liquid, such as water or a mixture of water and cleansing and/or solvent agents, wax, polishing agents or the like (222, 212).

5. A dual-gantry vehicle wash system as claimed in the preceding claim, **characterized in that** the nozzles of said high or low pressure liquid delivery devices (222, 212) and/or said high or low pressure liquid delivery device can be moved along the vertical axis of the posts of the second gantry element (202) and/or can be oriented with at least one degree of freedom relative to the surfaces of the vehicle to be treated.

6. A dual-gantry vehicle wash system as claimed in claim 5, **characterized in that** at least some of the operating elements on the second gantry element (202), i.e. one or more nozzles for delivering a high pressure liquid, such as water, or a low pressure liquid, such as water or a mixture of water and cleansing and/or solvent agents, wax, polishing agents or the like (222, 212) are supported by a horizontal bar associated with said second gantry element (202), said bar being displaced upwards and/or downwards relative to the bearing surfaces of the gantries (1) and (2) and the vehicle (3) along guides on the posts of said second gantry element (202) by independent electric, pneumatic or hydraulic lifting members.

7. A dual-gantry vehicle wash system as claimed in one or more of the preceding claims, **characterized in that** a cantilever support element (182) is provided for bearing the second gantry element (202), said support element (182) consisting of one, preferably two arms that are fixed to the lower portion of the posts of the first gantry element (102), which arms have at their free ends, opposite to the linked ends, a preferably concave or cup-shaped seat for receiving the free ends of the posts of the second gantry element (202), said support element (182) or arms having such a length and inclination as to intersect the arch of the lower end of the second gantry element (202) at the greatest distance of said second gantry element (202) from said first gantry element (101), and which support element (182) or arms occupy voids of the drying gantry (1), when the washing gantry (2) and the drying gantry (1) are in adjacent positions.

8. A dual-gantry vehicle wash system as claimed in one or more of the preceding claims, **characterized in that** the first gantry element (102) has at least one of the following operating elements, individually or in combination, on its crossbeam and/or on at least one post:
- means for mechanical dirt removal from the rims and/or the wheels, i.e. a wheel-washing device (122),
- at least one device rotating about a substantially horizontal axis, for delivering a high-pressure liquid product or a mixture of such products for washing and/or rinsing the wheel rims of the vehicle,
- at least one pair of vertical rotating brushes or brush assemblies (132) and/or at least one horizontal brush or brush assemblies (142), their orientation being related to the vehicle (3), for dirt removal, said brushes (132, 142) being designed to swing or move along the posts of the gantry element (202),
- one or more nozzles of a device for delivery of a liquid product or a mixture of liquid products, such as water or a mixture of cleansing products for vehicle washing, said delivery nozzles (172) of the so-called pre-brush delivery device being disposed on the posts and/or the crossbeam of the first gantry element (102) upstream from and adjacent to the horizontal (142) and/or vertical (132) brush/es, i.e. on the side of the second gantry element (202) facing towards the drying gantry (1), thereby allowing liquids to be delivered to the vehicle (3) prior to mechanical dirt removal by said brushes (142, 132),
- one or more nozzles (152) of a device for delivery of a liquid product or a mixture of liquid products, such as water or a mixture of cleansing products for vehicle washing, said nozzles (152) being placed level with the horizontal (142) and vertical (132) brushes thereby allowing simultaneous delivery of water or cleansing liquids, with mechanical dirt removal by said brushes (132, 142),
- one or more nozzles (162) for delivery of a liquid product or a mixture of liquid products for vehicle rinsing (3), located downstream from said brushes (142, 132).

9. A dual-gantry vehicle wash system as claimed in claim 8, **characterized in that** said nozzles (172) of the pre-brush liquid delivery device are disposed on at least one post and/or the crossbeam of the second gantry element (202) and/or on the swinging articulation means that support said second gantry element (202) in a cantilever fashion, particularly on at least one of the arms of the pantograph or four-bar linkage.

10. A dual-gantry vehicle wash system as claimed in one or more of the preceding claims, **characterized in that** the drying gantry (1) has at least one of the following operating elements, individually or in combination, on its crossbeam and/or on at least one post:
- one or more nozzles of a device for delivering a pressurized liquid, such as presoak and/or polishing agents (201),
- scan means (101) for scanning the contour of the vehicle (3),
- at least one outlet (301) for delivering jets or laminar flows of air to dry the vehicle (3),
- one or more nozzles (403) of a device for delivering a liquid product or a mixture of liquid products for washing and/or rinsing and/or polishing the wheel rims of the vehicle.

11. A dual-gantry vehicle wash system as claimed in one or more of the preceding claims, **characterized in that** the washing gantry (2) is connected to a third gantry element or at least one, preferably two bars (302), said third gantry element or said bars (302) being supported in a cantilever fashion by the swinging articulation means (112) that keep the plane subtended by the third gantry element or said bars (302) substantially parallel to and between the first and second gantry elements (102, 202), particularly said third gantry element or said bars (302) being linked to at least one of the swinging arms of the support four-bar linkage or pantograph.

12. A dual-gantry vehicle wash system as claimed in claim 11, **characterized in that** said third gantry element or said bars (302) have at least one nozzle of a liquid delivery device, and particularly has one or more nozzles of a device for delivery of a liquid product or a mixture of liquid products, such as water or a mixture of cleansing products for vehicle washing, acting as a pre-brush delivery device (172).

13. A dual-gantry vehicle wash system as claimed in claim 11 or 12, **characterized in that** at least one of the operating elements on said drying gantry (1) and/or on said first gantry element (102) and/or on said second gantry element (202) and/or on said third gantry element or bars (302) may translate, swing or rotate with at least one degree of freedom to follow the contour of the vehicle (3) obtained by the scan means (101) located on the drying gantry (1).

14. A vehicle washing process using a system as claimed in one or more of the preceding claims 1 to 13, **characterized in that** it has at least one forward stroke and at least one backward stroke of the gantries along the system rails, the following steps being included in the forward stroke:
- the drying gantry (1) moves forward while spraying a presoak agent and simultaneously scanning the contour of the vehicle (3) and possibly delivering rim and/or wheel washing products,
- the second gantry element (202) and the third gantry element or bars (302), if any, are moved away from the first gantry element (102) while high pressure washing water is sprayed by nozzles (212) located on said second gantry element and/or on the swinging articulation means (112), said nozzles (212) being designed to be displaced and oriented according to the detected contour of the vehicle (3),
- the first gantry element (102) is moved forward while pre-washing the vehicle by spraying cleansing products through pre-brush nozzles (172) and later washing it by operation of the brushes (132, 142) and cleansing agent delivery nozzles (152), possible operation of the wheel washing device, and final rinsing step by water delivery nozzles (162),
- the first gantry element (102) is caused to abut, with the second gantry element (202), against the first drying gantry (1) which acts as a stop to progressive motion towards it,
and the following steps being included in the backward stroke:
- the first gantry element (102) is moved forward while water delivery nozzles (162) and the vertical and horizontal brushes (132, 142) perform rinsing,
- the second gantry element (202) and the third gantry element or bars (302), if any, are moved away from the first gantry element (102) while polishing products, such as wax or the like, are sprayed by one or more nozzles (222) located on said second gantry element, said nozzles (222) being designed to be displaced and oriented according to the detected contour of the vehicle (3),
- the drying gantry (1) is moved forward while drying the vehicle (3) by delivery of air through outlets (301) that are designed to be displaced and oriented according to the detected contour of the vehicle (3),
- the drying gantry (1) is caused to abut, with the second gantry element (202), against the first gantry element (102) which acts as a stop to progressive motion towards it.

15. A vehicle washing process using a system as claimed in claim 14, **characterized in that** the vehicle (3) is prewashed by spraying cleansing products through pre-brush nozzles (172) located on the third gantry element or bars (302) and/or on the swinging articulation means (112), particularly the arms of the support four-bar linkage or pantograph.

16. A vehicle washing process using a system as claimed in claim 14 or 15, **characterized in that** it has at least one intermediate backward stroke and one intermediate forward stroke, the following steps being included in the intermediate backward stroke:
- rinsing is carried out through water delivery by nozzles (162) and operation of the brushes (132, 142) on the first gantry element (102),
- polishing agents and/or waxes are delivered by nozzles (201) on the drying gantry (1),
and the following steps being included in the intermediate forward stroke:
- the polishing agents and/or waxes are distributed and rubbed on the body of the vehicle (3) by the brushes (132,142) on the first gantry element (102),
- polishing agents and/or waxes are delivered by nozzles (201) located on the drying gantry (1), said delivery of polishing agents and/or waxes performed during the intermediate forward stroke being provided alternatively or additionally to the delivery of polishing agents and/or waxes performed during the intermediate backward stroke.

17. A vehicle washing process using a system as claimed in claim 14 or 15, **characterized in that** it has at least one intermediate backward stroke and one intermediate forward stroke, the following steps being included in the intermediate backward stroke:
- rinsing is carried out through water delivery by nozzles (162) and operation of the brushes (132, 142) on the first gantry element (102),
- the vehicle (3) undergoes quick drying through delivery of air through outlets (301) that are designed to be displaced and oriented according to the contour of the vehicle (3),
and the following steps being included in the intermediate forward stroke:
- polishing agents and/or waxes are delivered by nozzles (201) on the drying gantry (1),
- the polishing agents are distributed and rubbed on the body of the vehicle (3) by the brushes (132,142) on the first gantry element (102).

18. A dual-gantry vehicle washing system comprising a first gantry fitted with at least the drying devices, i.e. the co-called drying gantry (1) and a second gantry fitted with at least one brush assembly, i.e. the so-called washing gantry (2), said first gantry (1) is composed of at least two gantry elements, namely a first gantry element fitted with at least the drying devices, which lies on the ground and is slideably guided by translational means, and has a motor for driving said translational means, and a second gantry element which is connected to the first gantry element via articulation means allowing said second gantry element to be displaced towards and away from a front side of said first gantry element, that is the front side of said first gantry element which faces towards the second washing gantry (2), said articulation means being of non-motorized type, **characterized in that** said second gantry element is hangingly supported at a certain distance from the lower supporting ends of the first gantry element and the second washing gantry (2), so that the first motorized gantry element of the first washing gantry (1) is displaced with the second gantry element, during the translational motion, without any relative motion therebetween and said second gantry element is pushed against said first gantry element as said first drying gantry (1) abuts by its second gantry element against the second washing gantry (2) which acts as a stop to progressive motion towards it.

## Patentansprüche

1. Doppelportal-Fahrzeugwaschsystem, umfassend ein erstes Portal, das zumindest mit den Trocknungsvorrichtungen ausgestattet ist, d.h. das sogenannte Trocknungsportal (1), und ein zweites Portal, das zumindest mit einer Bürstenbaugruppe ausgestattet ist, d.h. das sogenannte Waschportal (2), wobei das zweite Portal (1,2) aus zumindest zwei Portalelementen besteht, nämlich einem ersten Portalelement (102), das mit zumindest einer Bürstenbaugruppe ausgestattet ist, die auf dem Boden liegt und durch ein translatorisches Mittel verschiebbar geführt ist, und einen Motor zum Antreiben des translatorischen Mittels hat, und einem zweiten Portalelement (202), das mit dem ersten Portalelement (102) durch ein gelenkiges Mittel (112) verbunden ist, die es dem zweiten Portalelement (202) ermöglichen, auf eine Vorderseite des ersten Portalelementes (102), die die Vorderseite des ersten Portalelements (102) ist, welches in Richtung des ersten Trocknungsportals (1) weist, zu und von dieser weg verschoben zu werden, wobei die gelenkigen Mittel (112) von einer nicht motorisierten Art sind, ***dadurch gekennzeichnet,* dass** das zweite Portalelement (202) hängend in einem bestimmten Abstand von den unteren stützenden Enden des ersten Portalelements und des ersten Trocknungsportals (1) gelagert oder gestützt ist, so dass das erste Portalelement (102) des zweiten Waschportals (2) während der Translationsbewegung ohne irgendeine Relativbewegung dazwischen mit dem zweiten Portalelement (202) verschoben wird, und das zweite Portalelement (202) gegen das erste Portalelement (102) gedrückt wird, wenn das zweite Waschportal (2) mit seinem zweiten Portalelement (202) gegen das erste Trocknungsportal (1), das als ein Anschlag für fortschreitende Bewegung darauf zu wirkt, anstößt.

2. Doppelportal-Fahrzeugwaschsystem nach Anspruch 1, ***dadurch gekennzeichnet,* dass** das zweite Portalelement (202) in einer freitragenden Weise durch schwingende gelenkige Mittel (112) gelagert ist, die die Ebene, die durch das zweite Portalelement (202) begrenzt ist, im Wesentlichen parallel zu dem ersten Portalelement (102) halten.

3. Doppelportal-Fahrzeugwaschsystem nach Anspruch 2, ***dadurch gekennzeichnet,* dass** das schwingende gelenkige Mittel (112) zumindest einen schwingenden Arm umfasst, vorzugsweise ein Gelenkviereck oder einen Stützpantographen, das aus zwei Paaren paralleler Arme zusammengesetzt ist, wobei die Arme mit dem unteren Abschnitt des Pfostens des ersten Portalelementes (102) und mit einem oberen Querbalken des zweiten Portalelements (202) oder dem horizontalen Arm, zum Stützen eines oberen Querträgers des zweiten Portalelements (202) verbunden sind.

4. Doppelportal-Fahrzeugwaschsystem nach einem oder mehreren der vorhergehenden Ansprüche, ***dadurch gekennzeichnet,* dass** zumindest ein Pfosten und/oder der Querträger des zweiten Portalelements (202) mit einer oder mehreren Düsen von zumindest einer Bereitstellungsvorrichtung einer Hochdruckflüssigkeit, wie z.B. Wasser, oder einer Niederdruckflüssigkeit, wie z.B. Wasser oder einer Mischung aus Wasser und Reinigungs- und/oder Lösungsmitteln, Wachs, Poliermitteln oder ähnlichem (222, 212) ausgestattet ist.

5. Doppelportal-Fahrzeugwaschsystem nach dem vorhergehenden Anspruch, ***dadurch gekennzeichnet,* dass** die Düsen der Bereitstellungsvorrichtungen (222, 212) für Hoch- oder Niederdruckflüssigkeit und/oder die Bereitstellungsvorrichtung für Hoch- oder Niederdruckflüssigkeit längs der vertikalen Achse der Pfosten des zweiten Portalelements (202) bewegt und/oder mit zumindest einem Freiheitsgrad relativ zu den Oberflächen des zu behandelnden Fahrzeugs ausgerichtet werden können.

6. Doppelportal-Fahrzeugwaschsystem nach Anspruch 5, ***dadurch gekennzeichnet,* dass** zumindest einige der Betriebselemente auf dem zweiten Portalelement (202), d.h. eine oder mehrere Düsen zum Bereitstellen einer Hochdruckflüssigkeit, wie z.B. Wasser, oder einer Niederdruckflüssigkeit, wie z.B. Wasser oder einer Mischung von Wasser und Reinigungs- und/oder Lösungsmitteln, Wachs, Poliermitteln oder ähnlichem (222, 212) durch einen mit dem zweiten Portalelement (202) verbundenen horizontalen Balken gestützt sind, wobei der Balken aufwärts und/oder abwärts relativ zu den tragenden Oberflächen der Portale (1) und (2) und dem Fahrzeug (3) längs Führungen auf den Pfosten des zweiten Portalelements (202) durch unabhängige elektrische, pneumatische oder hydraulische Hebe-Elemente verschoben wird.

7. Doppelportal-Fahrzeugwaschsystem nach einem oder mehreren der vorhergehenden Ansprüche, ***dadurch gekennzeichnet,* dass** ein freischwebendes Stützelement (182) zum Tragen des zweiten Portalelements (202) vorgesehen ist, wobei das Stützelement (182) aus einem, vorzugsweise zwei Armen besteht, die an dem unteren Abschnitt der Pfosten des ersten Portalelements (102) befestigt sind, wobei die Arme an ihren freien Enden, entgegengesetzt zu den verbundenen Enden, einen vorzugsweise konkaven oder schalenförmigen Sitz zum Aufnehmen der freien Enden der Pfosten des zweiten Portalelements (202) haben, und wobei das Stützelement (182) oder die Arme eine Länge und Neigung derart haben, dass sie den Bogen des unteren Endes des zweiten Portalelements (202) im größten Abstand des zweiten Portalelements (202) vom ersten Portalelement (101) schneiden, und wobei das Stützelement (182) oder die Arme Hohlräume des Trocknungsportals (1) belegen, wenn das Waschportal (2) und das Trocknungsportal (1) in benachbarten Positionen sind.

8. Doppelportal-Fahrzeugwaschsystem nach einem oder mehreren der vorhergehenden Ansprüche, ***dadurch gekennzeichnet,* dass** das erste Portalelement (102) zumindest eines der folgenden Betriebselemente einzeln oder in Verbindung auf seinem Querträger und/oder auf zumindest einem Pfosteneiler aufweist:
- eine Vorrichtung zum mechanischen Schmutzentfernen von den Felgen und/oder den Rädern, d.h. eine Radwaschvorrichtung (122),
- zumindest eine Vorrichtung, die sich um eine im wesentlichen horizontale Achse dreht, um ein Hochdruckflüssigkeitsprodukt oder eine Mischung derartiger Produkte zum Waschen und/oder Spülen der Radfelgen des Fahrzeuges bereitzustellen,
- zumindest ein Paar vertikal rotierender Bürsten oder Bürstenbaugruppen (132) und/oder zumindest eine horizontale Bürste oder Bürstenbaugruppen (142), deren Ausrichtung auf das Fahrzeug (3) bezogen ist, zum Entfernen von Schmutz, wobei diese Bürsten (132, 142) so gestaltet sind, dass sie längs der Pfosten des Portalelements (202) schwingen oder sich bewegen,
- eine oder mehrere Düsen einer Vorrichtung zum Bereitstellen eines Flüssigkeitsprodukts oder einer Mischung von Flüssigkeitsprodukten, wie z.B. Wasser oder einer Mischung von Reinigungsprodukten zum Fahrzeugwaschen, wobei die Bereitstellungsdüsen (172) der sogenannten Vorbürst-Bereitstellungsvorrichtung auf den Pfosten und/oder den Querträgern des ersten Portalelements (102) stromaufwärts von und benachbart zu der(n) horizontalen (142) und/oder vertikalen (132) Bürste/Bürsten angeordnet sind, d.h. auf der Seite des zweiten Portalelements (202), das in Richtung des Trocknungsportals (1) gerichtet ist, wobei es Flüssigkeiten ermöglicht wird, vor dem mechanischen Schmutzentfernen durch die genannten Bürsten (142, 132) an das Fahrzeug (3) bereitgestellt zu werden,
- eine oder mehrere Düsen (152) einer Vorrichtung zum Bereitstellen eines Flüssigkeitsprodukts oder einer Mischung von Flüssigkeitsprodukten, wie z.B. Wasser oder eine Mischung von Reinigungsmitteln zum Fahrzeugwaschen, wobei die Düsen (152) auf einer Ebene mit den horizontalen (142) und vertikalen (132) Bürsten angeordnet sind, wodurch die gleichzeitige Bereitstellung von Wasser oder Reinigungsmitteln zum mechanischen Schmutzentfernen durch die genannten Bürsten (132, 142) ermöglicht ist,
- eine oder mehrere Düsen (162) zum Bereitstellen eines Flüssigkeitsproduktes oder einer Mischung von Flüssigkeitsprodukten zum Spülen des Fahrzeugs (3), die stromabwärts von den genannten Bürsten (142, 132) angeordnet sind.

9. Doppelportal-Fahrzeugwaschsystem nach Anspruch 8, ***dadurch gekennzeichnet,* dass** die Düsen (172) der Vorbürst-Flüssigkeitsbereitstellungsvorrichtung auf zumindest einem Pfosten und/oder dem Querträger des zweiten Portalelements (202) und/oder auf den schwingenden gelenkigen Mitteln, die das zweite Portalelement (202) in einer frei tragenden Weise stützen, insbesondere auf zumindest einem der Arme des Pantographen oder des Gelenkvierecks, angeordnet sind.

10. Doppelportal-Fahrzeugwaschsystem nach einem oder mehreren der vorhergehenden Ansprüche, ***dadurch gekennzeichnet,* dass** das Trocknungsportal (1) zumindest eines der folgenden Betriebselemente einzeln oder in Kombination, auf seinem Querträger und/oder auf zumindest einem Pfosten aufweist:
- eine oder mehrere Düsen einer Vorrichtung zum Bereitstellen einer Flüssigkeit unter Druck, wie z.B. Voreinweich- und/oder Poliermitteln (201),
- einer Scanvorrichtung (101) zum Scannen der Kontur des Fahrzeugs (3),
- zumindest einen Auslass (303) zum Bereitstellen von Düsen für Laminarströmungen von Luft zum Trocknen des Fahrzeugs (3),
- eine oder mehrere Düsen (403) einer Vorrichtung zum Bereitstellen eines Flüssigkeitsprodukts oder einer Mischung von Flüssigkeitsprodukten zum Waschen und/oder Spülen und/oder Polieren der Radfelgen des Fahrzeugs.

11. Doppelportal-Fahrzeugwaschsystem nach einem oder mehreren der vorhergehenden Ansprüche, ***dadurch gekennzeichnet,* dass** das Waschportal (2) mit einem dritten Portalelement oder zumindest einem, vorzugweise zwei Trägern (302) verbunden ist, wobei das dritte Portalelement oder die Träger (302) in einer freitragenden Weise durch die schwingenden gelenkigen Mittel (112) gestützt sind, die die Ebene, die durch das dritte Portalelement oder die Träger (302) begrenzt ist, im Wesentlichen parallel zu und zwischen den ersten und zweiten Portalelementen (102, 202) halten, wobei insbesondere das dritte Portalelement oder die Träger (302) mit zumindest einem der schwingenden Arme des stützenden Gelenkvierecks oder Pantographen verbunden sind.

12. Doppelportal-Fahrzeugwaschsystem nach Anspruch 11, ***dadurch gekennzeichnet,* dass** das dritte Portalelement oder die Träger (302) zumindest eine Düse einer Flüssigkeits-Bereitstellungsvorrichtung aufweisen, und insbesondere eine oder mehrere Düsen einer Vorrichtung zum Bereitstellen eines Flüssigkeitsprodukts oder einer Mischung von Flüssigkeitsprodukten, wie z.B. Wasser oder einer Mischung von Reinigungsmitteln für Fahrzeugwäsche aufweist, die als eine Vorbürst-Bereitstellungsvorrichtung (172) wirken.

13. Doppelportal-Fahrzeugwaschsystem nach den Ansprüchen 11 oder 12, ***dadurch gekennzeichnet,* dass** zumindest eines der Betriebselemente auf dem Trocknungsportal (1) und/oder auf dem ersten Portalelement (102) und/oder auf dem zweiten Portalelement (202) und/oder auf dem dritten Portalelement oder den Trägern (302) mit zumindest einem Freiheitsgrad translatorisch bewegt, schwingt oder rotiert, um der Kontur des Fahrzeuges (3) zu folgen, die durch die ScanVorrichtung (101) erhalten wird, die auf dem Trocknungsportal (1) angeordnet ist.

14. Ein gemäß einem oder mehreren der vorhergehenden Ansprüche 1 bis 13 verwendetes System in einem Fahrzeug-Waschverfahren, ***dadurch gekennzeichnet,* dass** es zumindest eine Vorwärtsbewegung und zumindest eine Rückwärtsbewegung der Portale längs der Schienen des Systems hat, wobei in der Vorwärtsbewegung die folgenden Schritte enthalten sind:
- das Trocknungsportal (1) bewegt sich vorwärts, während es ein Voreinweich-Mittel sprüht und gleichzeitig die Kontur des Fahrzeugs (3) scannt und möglicherweise Felgen- und/oder Radwaschprodukte bereitstellt,
- das zweite Portalelement (202) und das dritte Portalelement oder die Träger (302), wenn überhaupt, werden vom ersten Portalelement (102) weg bewegt, während Hochdruck-Waschwasser durch Düsen (212), die auf dem zweiten Portalelement und/oder auf den schwingenden gelenkigen Mitteln angeordnet sind, gesprüht wird, wobei die Düsen (212) so gestaltet sind, dass sie gemäß der erkannten Kontur des Fahrzeugs (3) verschoben und ausgerichtet werden können,
- das erste Portalelement (102) wird vorwärtsbewegt, während das Fahrzeug durch Sprühen von Reinigungsprodukten durch Vorbürst-Düsen (172) vorgewaschen wird, und es später durch Betätigung der Bürsten (132, 142) und von Reinigungsmittel-Bereitstellungsdüsen (152), einer möglichen Betätigung der Radwaschvorrichtungen, und eines abschließenden Spülschritts durch Wasserbereitstellungsdüsen (162) gewaschen wird,
- das erste Portalelement (102) wird dazu gebracht, mit dem zweiten Portalelement (202) gegen das erste Trocknungsportal (1)zu stoßen, das als ein Anschlag für fortschreitende Bewegung darauf zu dient,
und wobei die folgenden Schritte in der Rückwärtsbewegung enthalten sind:
- das erste Portalelement (102) wird vorwärts bewegt, während Wasserbereitstellungsdüsen (162) und die vertikalen und horizontalen Bürsten (132, 142) das Spülen durchführen,
- das zweite Portalelement (202) und das dritte Portalelement oder die Träger (302), wenn überhaupt, werden weg vom ersten Portalelement (102) bewegt, während Polierprodukte wie z.B. Wachs oder ähnliches, von einer oder mehreren Düsen (222), die auf dem zweiten Portalelement angeordnet sind, gesprüht werden, wobei die Düsen (222) so gestaltet sind, dass sie gemäß der erkannten Kontur des Fahrzeugs (3) verschoben und ausgerichtet werden können,
- das Trocknungsportal (1) wird vorwärtsbewegt, während das Fahrzeug (3) durch Bereitstellung von Luft durch Auslässe (301), die so gestaltet sind, dass sie gemäß der erkannten Kontur des Fahrzeugs (3) verschoben und ausgerichtet werden können, getrocknet wird,
- das Trocknungsportal (1) wird dazu gebracht, mit dem zweiten Portalelement (202) an das erste Portalelement (102) zu stoßen, das als ein Anschlag für fortschreitende Bewegung darauf zu dient.

15. Fahrzeug-Waschverfahren unter Verwendung eines Systems nach Anspruch *14,* ***dadurch gekennzeichnet,* dass** das Fahrzeug (3) durch das Sprühen von Reinigungsmitteln durch Vorbürst-Düsen (172), die auf dem dritten Portalelement oder den Trägern (302) und/oder auf den schwingenden gelenkigen Mittel (112), insbesondere den Armen des stützenden Gelenkvierecks oder des Pantographen angeordnet sind, vorgewaschen wird.

16. Fahrzeug-Waschverfahren unter Verwendung eines Systems nach den Ansprüchen 14 oder 15, ***dadurch gekennzeichnet,* dass** es zumindest eine zwischenliegende Rückwärtsbewegung und eine zwischenliegende Vorwärtsbewegung aufweist, wobei die folgenden Schritte in der zwischenliegenden Rückwärtsbewegung enthalten sind:
- das Spülen wird durch die Bereitstellung von Wasser durch Düsen (162) und Betätigung der Bürsten (132, 142) auf dem ersten Portalelement (102) durchgeführt,
- Poliermittel und/oder Wachse werden durch Düsen (201) auf dem Trocknungsportal (1) bereitgestellt,
und die folgenden Schritte in der zwischenliegenden Vorwärtsbewegung enthalten sind:
- die Poliermittel und/oder Wachse werden durch die Bürsten (132, 142) auf dem ersten Portalelement (102) auf den Körper des Fahrzeuges (3) verteilt und eingerieben,
- Poliermittel und/oder Wachse werden durch Düsen (201), die auf dem Trocknungsportal (1) angeordnet sind, bereitgestellt, wobei die Bereitstellung von Poliermitteln und/oder von Wachsen, die während der zwischenliegenden Vorwärtsbewegung ausgeführt wird, alternativ oder zusätzlich zu der Bereitstellung von Poliermitteln und/oder Wachsen, die während der zwischenliegenden Rückwärtsbewegung ausgeführt wird, vorgesehen ist.

17. Fahrzeug-Waschverfahren unter Verwendung eines Systems nach den Ansprüchen 14 oder 15, ***dadurch gekennzeichnet,* dass** es zumindest eine zwischenliegende Rückwärtsbewegung und eine zwischenliegende Vorwärtsbewegung aufweist, wobei die folgenden Schritte in der zwischenliegenden Rückwärtsbewegung enthalten sind:
- das Spülen wird durch die Bereitstellung von Wasserdurch Düsen (162) und Betätigung der Bürsten (132, 142) auf dem ersten Portalelement (102) durchgeführt,
- das Fahrzeug (3) wird einem schnellen Trocknen durch Bereitstellung von Luft durch Auslässe (301), die so gestaltet sind, dass sie gemäß der Kontur des Fahrzeuges (3) verschoben und ausgerichtet werden können, unterzogen,
und die folgenden Schritte in der zwischenliegenden Vorwärtsbewegung enthalten sind:
- Poliermittel und/oder Wachse werden durch Düsen (201) auf dem Trocknungsportal (1) bereitgestellt,
- die Poliermittel werden auf den Körper des Fahrzeuges (3) durch die Bürsten (132, 142) auf dem ersten Portalelement (102) verteilt und eingerieben.

18. Doppelportal-Fahrzeugwaschsystem, umfassend ein erstes Portal, das zumindest mit den Trocknungsvorrichtungen ausgerüstet ist, d.h. das sogenannte Trocknungsportal (1), und ein zweites Portal, das mit zumindest einem Bürstenzusammenbau ausgerüstet ist, d.h. das sogenannte Waschportal (2), wobei das erste Portal (1) aus zumindest zwei Portal elementen zusammengesetzt ist, nämlich einem ersten Portalelement, das zumindest mit den Trocknungsvorrichtungen ausgerüstet ist, welches auf dem Boden liegt und durch translatorische Mittel verschiebbar geführt ist und das einen Motor für das Antreiben der translatorischen Mittel aufweist, und einem zweiten Portalelement, das mit dem ersten Portalelement durch ein gelenkiges Mittel verbunden ist, die es dem zweiten Portalelement ermöglichen, auf eine Vorderseite des ersten Portalelements, welche die Vorderseite des ersten Portalelements ist, das in Richtung des zweiten Waschportals (2) gerichtet ist, zu und von dieser weg verschoben zu werden, wobei die gelenkigen Mittel von einer nichtmotorisierten Art sind, ***dadurch gekennzeichnet,* dass** das zweite Portalelement hängend in einem bestimmten Abstand von den unteren stützenden Enden des ersten Portalelements und des zweiten Waschportals (2) gestützt ist, so dass das erste motorisierte Portalelement des ersten Waschportals (1) mit dem zweiten Portalelement ohne irgendeine Relativbewegung dazwischen während der Translationsbewegung verschoben ist, und das zweite Portalelement gegen das erste Portalelement gedrückt ist, wenn das erste Trocknungsportal (1) mit seinem zweiten Portalelement gegen das zweite Waschportal (2) stößt, welches als ein Anschlag für fortschreitende Bewegung darauf zu dient.

## Revendications

1. Système de lavage de véhicule à double portique comprenant un premier portique équipé avec au moins des dispositifs de séchage, c'est-à-dire le dénommé portique de séchage (1) et un second portique équipé avec au moins un ensemble de brosses, c'est-à-dire le dénommé portique de lavage (2), ledit second portique (1, 2) est composé d'au moins deux éléments de portique, à savoir un premier élément de portique (102) avec au moins un ensemble de brosse qui se trouve sur le sol et est guidé de manière coulissante par des moyens de translation, et a un moteur pour entraîner lesdits moyens de translation, et un deuxième élément de portique (202) qui est raccordé au premier élément de portique (102) via des moyens d'articulation (112) permettant audit deuxième élément de portique (202) d'être déplacé vers et à distance d'un côté avant dudit premier élément de portique (102), qui est le côté avant du premier élément de portique (102) qui est orienté vers le premier portique de séchage (1), lesdits moyens d'articulation (112) étant de type non motorisé, **caractérisé en ce que** ledit deuxième élément de portique (202) est supporté en suspension à une certaine distance des extrémités de support inférieures du premier élément de portique et du premier portique de séchage (1), de sorte que le premier élément de portique (102) du second portique de lavage (2) est déplacé avec le deuxième élément de portique (202), pendant le mouvement de translation, sans mouvement relatif entre eux et ledit deuxième élément de portique (202) est poussé contre ledit premier élément de portique (102) lorsque ledit second portique de lavage (2) s'appuie, grâce à son deuxième élément de portique (202), contre le premier portique de séchage (1) qui agit comme une butée au mouvement progressif vers ce dernier.

2. Système de lavage de véhicule à double portique selon la revendication 1, **caractérisé en ce que** ledit deuxième élément de portique (202) est supporté en porte-à-faux par des moyens d'articulation oscillants (112) qui maintiennent le plan sous-tendu par le deuxième élément de portique (202) sensiblement parallèle au premier élément de portique (102).

3. Système de lavage de véhicule à double portique selon la revendication 2, **caractérisé en ce que** lesdits moyens d'articulation oscillants (112) comprennent au moins un bras oscillant, de préférence une tringlerie à quatre barres ou un pantographe de support, composé de deux paires de bras parallèles, lesquels bras sont reliés à la partie inférieure des montants du premier élément de portique (102) et à une traverse supérieure du deuxième élément de portique (202) ou au bras horizontal pour supporter une traverse supérieure du deuxième élément de portique (202).

4. Système de lavage de véhicule à double portique selon une ou plusieurs des revendications précédentes, **caractérisé en ce qu'**au moins un montant et/ou la traverse du deuxième élément de portique (202) est équipé(e) avec une ou plusieurs buses d'au moins un dispositif pour distribuer un liquide à haute pression, tel que de l'eau, ou un liquide à basse pression, tel que de l'eau ou un mélange d'eau et d'agents nettoyants et/ou solvants, de la cire, des agents polissants ou similaires (222, 212).

5. Système de lavage de véhicule à double portique selon la revendication précédente, **caractérisé en ce que** les buses desdits dispositifs de distribution de liquide à haute ou basse pression (222, 212) et/ou ledit dispositif de distribution de liquide à haute ou basse pression peuvent être déplacées le long de l'axe vertical des montants du deuxième élément de portique (202) et/ou peuvent être orientées avec au moins un degré de liberté par rapport aux surfaces du véhicule à traiter.

6. Système de lavage de véhicule à double portique selon la revendication 5, **caractérisé en ce qu'**au moins certains des éléments de commande sur le deuxième élément de portique (202), c'est-à-dire une ou plusieurs buses pour distribuer un liquide à haute pression, tel que de l'eau, ou un liquide à basse pression, tel que de l'eau ou un mélange d'eau et d'agents nettoyants et/ou solvants, de la cire, des agents polissants ou similaires (222, 212) sont supportés par une barre horizontale associée avec ledit deuxième élément de portique (202), ladite barre étant déplacée vers le haut et/ou vers le bas par rapport aux surfaces d' appui des portiques (1) et (2) et au véhicule (3) le long des guides sur les montants dudit deuxième élément de portique (202) par des éléments de levage indépendants, électriques, pneumatiques ou hydrauliques.

7. Système de lavage de véhicule à double portique selon une ou plusieurs des revendications précédentes, **caractérisé en ce qu'**un élément de support en porte-à-faux (182) est prévu pour supporter le deuxième élément de portique (202), ledit élément de support (182) se composant d'un, de préférence de deux bras qui sont fixés à la partie inférieure des montants du premier élément de portique (102), lesquels bras ont au niveau de leurs extrémités libres, opposées aux extrémités reliées, un siège de préférence concave ou en forme de coupelle pour recevoir les extrémités libres des montants du deuxième élément de portique (202), ledit élément de support (182) ou les bras ayant une longueur telle et une inclinaison telle qu'il(s) coupe(nt) l'arche de l'extrémité inférieure du deuxième élément de portique (202) à la plus grande distance dudit deuxième élément de portique (202) par rapport audit premier élément de portique (101), lequel élément de support (182) ou les bras occupent des vides du portique de séchage (1) lorsque le portique de lavage (2) et le portique de séchage (1) sont dans des positions adjacentes.

8. Système de lavage de véhicule à double portique selon une ou plusieurs des revendications précédentes, **caractérisé en ce que** le premier élément de portique (102) a au moins l'un des éléments de commande suivants, individuellement ou en combinaison, sur sa traverse et/ou sur au moins un montant :
des moyens pour le retrait mécanique de la saleté des jantes et/ou des roues, c'est-à-dire un dispositif de lavage de roue (122),
au moins un dispositif tournant autour d'un axe sensiblement horizontal, pour distribuer un produit liquide à haute pression ou un mélange de tels produits pour laver et/ou rincer les jantes de roue du véhicule,
au moins une paire de brosses rotatives verticales ou d'ensembles de brosses verticales (132) et/ou au moins une brosse horizontale ou des ensembles de brosses horizontales (142), leur orientation étant liée au véhicule (3), pour retirer la saleté, lesdites brosses (132, 142) étant conçues pour osciller ou se déplacer le long des montants de l'élément de portique (202),
une ou plusieurs buses d'un dispositif pour distribuer un produit liquide ou un mélange de produits liquides, tel que de l'eau ou un mélange de produits nettoyants pour nettoyer le véhicule, lesdites buses de distribution (172) du dénommé dispositif de distribution pré-brossage étant disposées sur les montants et/ou la traverse du premier élément de portique (102) en amont de et de manière adjacente à la brosse (aux brosses) horizontale(s) (142) et/ou verticale(s) (132), c'est-à-dire du côté du deuxième élément de portique (202) qui est orienté vers le portique de séchage (1), permettant ainsi de distribuer les liquides sur le véhicule (3) avant de retirer mécaniquement la saleté grâce auxdites brosses (142, 132),
une ou plusieurs buses (152) d'un dispositif pour distribuer un produit liquide ou un mélange de produits liquides, tel que de l'eau ou un mélange de produits nettoyants pour laver le véhicule, lesdites buses (152) étant placées de niveau avec les brosses horizontales (142) et verticales (132) permettant ainsi la distribution simultanée de l'eau ou des liquides nettoyants, avec le retrait mécanique de la saleté par lesdites brosses (132, 142),
une ou plusieurs buses (162) pour distribuer un produit liquide ou un mélange de produits liquides pour rincer le véhicule (3), positionnées en aval desdites brosses (142, 132).

9. Système de lavage de véhicule à double portique selon la revendication 8, **caractérisé en ce que** lesdites buses (172) du dispositif de distribution de liquide pré-brossage sont disposées sur au moins un montant et/ou la traverse du deuxième élément de portique (202) et/ou sur les moyens d'articulation oscillants qui supportent ledit deuxième élément de portique (202) en porte-à-faux, en particulier sur au moins l'un des bras du pantographe ou de la tringlerie à quatre barres.

10. Système de lavage de véhicule à double portique selon une ou plusieurs des revendications précédentes, **caractérisé en ce que** le portique de séchage (1) a au moins l'un des éléments de commande suivants, individuellement ou en combinaison, sur sa traverse et/ou sur au moins un montant :
une ou plusieurs buses d'un dispositif pour distribuer un liquide sous pression, tel qu'un liquide de prélavage et/ou des agents polissants (201),
des moyens de balayage (101) pour balayer le contour du véhicule (3),
au moins une sortie (301) pour distribuer des jets ou des écoulements laminaires d'air afin de sécher le véhicule (3),
une ou plusieurs buses (403) d'un dispositif pour distribuer un produit liquide ou un mélange de produits liquides pour laver et/ou rincer et/ou polir les jantes de roue du véhicule.

11. Système de lavage de véhicule à double portique selon une ou plusieurs des revendications précédentes, **caractérisé en ce que** le portique de lavage (2) est raccordé à un troisième élément de portique ou au moins une, de préférence deux barres (302), ledit troisième élément de portique ou lesdites barres (302) étant supporté(es) en porte-à-faux par des moyens d'articulation oscillants (112) qui maintiennent le plan sous-tendu par le troisième élément de portique ou lesdites barres (302), sensiblement parallèles à et entre les premier et deuxième éléments de portique (102, 202), en particulier ledit troisième élément de portique ou lesdites barres (302) étant relié(es) à au moins l'un des bras oscillants de la tringlerie à quatre barres de support ou du pantographe.

12. Système de lavage de véhicule à double portique selon la revendication 11, **caractérisé en ce que** ledit troisième élément de portique ou lesdites barres (302) a (ont) au moins une buse d'un dispositif de distribution de liquide, et en particulier a (ont) une ou plusieurs buses d'un dispositif pour distribuer un produit liquide ou un mélange de produits liquides, tel que de l'eau ou un mélange de produits nettoyants pour laver le véhicule, agissant en tant que dispositif de distribution pré-brossage (172).

13. Système de lavage de véhicule à double portique selon la revendication 11 ou 12, **caractérisé en ce qu'**au moins l'un des éléments de commande sur ledit portique de séchage (1) et/ou ledit premier élément de portique (102) et/ou ledit deuxième élément de portique (202) et/ou ledit troisième élément de portique ou les barres (302) peut effectuer un mouvement de translation, osciller ou tourner avec au moins un degré de liberté pour suivre le contour du véhicule (3) obtenu par les moyens de balayage (101) positionnés sur le portique de séchage (1).

14. Procédé pour laver un véhicule en utilisant un système selon une ou plusieurs des revendications 1 à 13, **caractérisé en ce qu'**il y a au moins une course avant et au moins une course arrière des portiques le long des rails du système, les étapes suivantes étant incluses dans la course avant :
le portique de séchage (1) se déplace vers l'avant tout en pulvérisant un agent de prélavage et en balayant simultanément le contour du véhicule (3) et en distribuant éventuellement des produits de lavage pour jante et/ou roue,
le deuxième élément de portique (202) et le troisième élément de portique ou barres (302), s'il y en a, sont éloignés du premier élément de portique (102) alors que l'eau de lavage à haute pression est pulvérisée par des buses (212) positionnées sur ledit deuxième élément de portique et/ou sur les moyens d'articulation oscillants (112), lesdites buses (212) étant conçues pour être déplacées et orientées selon le contour détecté du véhicule (3),
le premier élément de portique (102) est déplacé vers l'avant tout en pré-lavant le véhicule en pulvérisant des produits nettoyants par les buses de pré-brossage (172) et en le lavant ensuite grâce au fonctionnement des brosses (132, 142) et des buses de distribution d'agent nettoyant (152), au fonctionnement éventuel du dispositif de lavage de roue et l'étape de rinçage finale par les buses de distribution d'eau (162),
le premier élément de portique (102) est amené à s'appuyer, avec le deuxième élément de portique (202), contre le premier portique de séchage (1) qui sert de butée au mouvement progressif vers ce dernier,
et les étapes suivantes étant incluses dans la course arrière :
le premier élément de portique (102) est déplacé vers l'avant alors que les buses de distribution d'eau (162) et les brosses verticales et horizontales (132, 142) réalisent le rinçage,
le deuxième élément de portique (202) et le troisième élément de portique ou les barres (302), s'il y en a, sont éloignés du premier élément de portique (102) alors que les produits polissants, tels que la cire ou similaire, sont pulvérisés par une ou plusieurs buses (222) positionnées sur ledit deuxième élément de portique, lesdites buses (222) étant conçues pour être déplacées et orientées selon le contour détecté du véhicule (3),
le portique de séchage (1) est déplacé vers l'avant tout en rinçant le véhicule (3) grâce à la distribution d'eau par des sorties (301) qui sont conçues pour être déplacées et orientées selon le contour détecté du véhicule (3),
le portique de séchage (1) est amené à s'appuyer, avec le deuxième élément de portique (202), contre le premier élément de portique (102) qui sert de butée au mouvement progressif vers ce dernier.

15. Procédé pour laver un véhicule en utilisant un système selon la revendication 14, **caractérisé en ce que** le véhicule (3) est pré-lavé en pulvérisant des produits nettoyants par les buses de pré-brossage (172) positionnées sur le troisième élément de portique ou les barres (302) et/ou sur les moyens d'articulation oscillants (112), en particulier les bras de la tringlerie à quatre barres de support ou le pantographe.

16. Procédé pour laver un véhicule en utilisant un système selon la revendication 14 ou 15, **caractérisé en ce qu'**il y a au moins une course arrière intermédiaire et une course avant intermédiaire, les étapes suivantes étant incluses dans la course arrière intermédiaire :
le rinçage est réalisé par la distribution d'eau par les buses (162) et le fonctionnement des brosses (132, 142) sur le premier élément de portique (102),
des agents polissants et/ou des cires sont distribué(e)s par les buses (201) sur le portique de séchage (1),
et les étapes suivantes étant incluses dans la course avant intermédiaire :
les agents polissants et/ou les cires sont distribué(e)s et appliqué(e)s sur la carrosserie du véhicule (3) par les brosses (132, 142) sur le premier élément de portique (102),
des agents polissants et/ou des cires sont distribué(e)s par les buses (201) positionnées sur le portique de séchage (1), ladite distribution des agents polissants et/ou des cires étant réalisée pendant la course avant intermédiaire qui est prévue en variante ou en plus de la distribution des agents polissants et/ou des cires réalisée pendant la course arrière intermédiaire.

17. Procédé pour laver un véhicule en utilisant un système selon la revendication 14 ou 15, **caractérisé en ce qu'**il comprend au moins une course arrière intermédiaire et une course avant intermédiaire, les étapes suivantes étant incluses dans la course arrière intermédiaire :
le rinçage est réalisé par la distribution d'eau par les buses (162) et le fonctionnement des brosses (132, 142) sur le premier élément de portique (102),
le véhicule (3) est soumis au séchage rapide par la distribution d'air par des sorties (301) qui sont conçues pour être déplacées et orientées selon le contour du véhicule (3),
et les étapes suivantes étant incluses dans la course arrière intermédiaire :
des agents polissants et/ou des cires sont distribué(e)s par les buses (201) sur le portique de séchage (1),
les agents polissants sont distribués et appliqués sur la carrosserie du véhicule (3) par les brosses (132, 142) sur le premier élément de portique (102).

18. Système de lavage de véhicule à double portique comprenant un premier portique équipé avec au moins les dispositifs de séchage, c'est-à-dire le dénommé portique de séchage (1) et un second portique équipé avec au moins un ensemble de brosses, c'est-à-dire le dénommé portique de lavage (2), ledit premier portique (1) est composé d'au moins deux éléments de portique, à savoir un premier élément de portique équipé avec au moins les dispositifs de séchage, qui se trouve sur le sol et est guidé de manière coulissante par des moyens de translation, et a un moteur pour entraîner lesdits moyens de translation, et un deuxième élément de portique qui est raccordé au premier élément de portique via des moyens d'articulation permettant audit deuxième élément de portique d'être déplacé vers et à distance d'un côté avant dudit premier élément de portique, qui est le côté avant dudit premier élément de portique qui est orienté vers le second portique de lavage (2), lesdits moyens d'articulation étant de type non motorisé, **caractérisé en ce que** ledit deuxième élément de portique est supporté en suspension à une certaine distance des extrémités de support inférieures du premier élément de portique et du second portique de lavage (2), de sorte que le premier élément de portique motorisé du premier portique de lavage (1) est déplacé avec le deuxième élément de portique, pendant le mouvement de translation, sans aucun mouvement relatif entre eux, et ledit deuxième élément de portique est poussé contre ledit premier élément de portique lorsque ledit premier élément de portique (1) s'appuie, grâce à son deuxième élément de portique, contre le second portique de lavage (2) qui sert de butée au mouvement progressif vers ce dernier.
